# EUROPEAN PATENT APPLICATION

(11) **EP 3 045 788 A1**
(43) Date of publication of application: **20.07.2016**
(21) Application number: 15199313.6
(22) Date of filing: 10.12.2015
(51) Int. Cl.: F16K 11/07, F16K 31/04

(54) **STEPPER MOTOR OPERATED BALANCED FLOW CONTROL VALVE**

(30) Priority: 13.01.2015 US 201514595351
(71) Applicant: MAC Valves, Inc., Wixom, Michigan 48393 (US)
(72) Inventor: WILLIAMS, Kevin C., Wixom, MI Michigan 48393 (US); YAHR, Paul A., Brighton, MI Michigan 48116 (US)
(74) Representative: Stuttard, Garry Philip

(57) **Abstract**

A flow control valve includes a body having a body bore oriented coaxially with a longitudinal axis of the body and a seat member extending into the bore. A valve member is slidably disposed in the bore and oriented coaxially with the longitudinal axis of the body. The valve member includes a non-circular geometrically shaped head having a bore. A drive adapter includes a head receiving cavity slidingly receiving the geometrically shaped head of the valve member and preventing axial rotation of the valve member. A stepper motor is connected to the drive adapter, the stepper motor incrementally rotating a shaft engaged with the bore of the valve member. First and second equal diameter pistons of the valve member provide pressure balanced valve member operating positions.

## Description

The present disclosure relates to flow control valves operated by a stepper motor.

This section provides background information related to the present disclosure which is not necessarily prior art.

Flow control valves can be operated by a stepper motor to improve repeatability of valve member positions for valves requiring increased accuracy in controlling flow variability between a fully open and/or a fully closed position. Operations requiring an accurate delivery of a fluid volume or pressure to a working device can therefore benefit from the accuracy a stepper motor imparts compared to other known valve actuators. Known flow control valves operated by a stepper motor, however, commonly require a gear system or a multiple directional component drive system to change the rotational force of the stepper motor to a longitudinal force used to translate a valve member to open or closed valve positions. Common operating systems therefore lose operating force in order to drive the multiple parts. The complexity, power loss, and tolerance of the multiple moving parts of known systems also decrease position accuracy and repeatability of the valve position(s) that are beneficial reasons for using stepper motors for valve actuation.

This section provides a general summary of the disclosure, and is not a comprehensive disclosure of its full scope or all of its features.

According to several embodiments, a flow control valve includes a body having a body bore oriented coaxially with a longitudinal axis of the body and a seat member extending into the bore. A valve member is slidably disposed in the bore and oriented coaxially with the longitudinal axis of the body. The valve member includes a non-circular geometrically shaped head having a bore. A drive adapter including a head receiving cavity slidingly receives the geometrically shaped head of the valve member while preventing axial rotation of the valve member. A stepper motor is connected to the drive adapter. The stepper motor operates to axially rotate a shaft directly engaged with the bore of the valve member.

According to other embodiments, a flow control valve includes a body having a body bore oriented coaxially with a longitudinal axis of the body. A valve member is slidably disposed in the bore and oriented coaxially with the longitudinal axis of the body. The valve member includes a non-circular geometrically shaped head having a bore; and at least one radial outwardly extending seat engagement member and first and second pistons. The first and second pistons have substantially equal diameters such that a pressurized fluid acting oppositely against the first and second pistons is balanced. A drive adapter includes a head receiving cavity slidingly receiving the geometrically shaped head of the valve member and preventing axial rotation of the valve member. A stepper motor is connected to the drive adapter. The stepper motor rotates a shaft directly engaged within the bore of the valve member to axially translate the valve member.

According to further embodiments, a flow control valve includes a body, having a body bore oriented coaxially with a longitudinal axis of the body, and first and second cylinder walls. A valve member is slidably disposed in the bore and oriented coaxially with the longitudinal axis of the body. The valve member includes a non-circular geometrically shaped head having a threaded bore coaxially aligned with the longitudinal axis. A first piston is positioned at an opposite end of the valve member from the geometrically shaped head. A second piston is positioned between the first piston and the geometrically shaped head. The first and second pistons seal against the cylinder walls of the body as the valve member slidably moves in the body bore. A drive adapter is connected to the body. The drive adapter includes a head receiving cavity slidingly receiving the geometrically shaped head of the valve member and preventing axial rotation of the valve member. A stepper motor is connected to the drive adapter. The stepper motor rotates a threaded shaft directly threadably engaged within the threaded bore of the valve member.

Viewed from a first aspect the present invention provides a flow control valve comprising:
a body having a longitudinal axis, the body defining a body bore oriented coaxially with the longitudinal axis and a seat member that extends into the body bore, the body bore having a bore diameter;
a valve member slidably disposed in the body bore and oriented coaxially with the longitudinal axis, the valve member including:
   a valve head having a geometric shape defined by at least one anti-spin feature disposed along an otherwise cylindrical surface;
   a valve member having a cylindrical shape, the valve member being disposed in the body bore adjacent the valve head and having a seat engagement member that extends radially outwardly to selectively engage the seat member of the body during sliding motion of the valve member in the body bore; and
   a threaded bore extending into the valve head;
   a drive adapter connected to the body, the drive adapter including a head receiving cavity that is shaped to match the geometric shape of the valve head and that slidingly receives the valve head while preventing axial rotation of the valve head relative to the drive adapter and the body;
   a stepper motor connected to the drive adapter, the stepper motor operating to axially rotate a shaft threadably engaged with the threaded bore of the valve head to axially displace the valve member; and
   an inlet port and an outlet port extending through the body from the body bore to a ported face of the body, the inlet port and the outlet port being disposed on opposite sides of the seat member.

Preferably the at least one anti-spin feature forming part of the geometric shape of the valve head includes a flat longitudinal face disposed along the otherwise cylindrical surface of the valve head. Particularly preferably the head receiving cavity includes a cavity face that abuts the flat longitudinal face of the valve head to prevent axial rotation of the valve head.

Preferably the geometric shape of the valve head includes two flat longitudinal faces disposed on opposite sides of the otherwise cylindrical surface of the valve head. Particularly preferably the head receiving cavity includes two cavity faces that abut the two flat longitudinal faces of the valve head to prevent axial rotation of the valve head.

Preferably the at least one anti-spin feature includes a groove disposed along the otherwise cylindrical surface of the valve head that engages the drive adapter to prevent rotation of the valve head relative to the drive adapter.

Preferably the at least one anti-spin feature includes a concave face disposed along the otherwise cylindrical surface of the valve head that abuts a complimentary cavity face of the head receiving cavity to prevent rotation of the valve head relative to the drive adapter.

Preferably the seat engagement member engages the seat member to define a closed position of the flow control valve. Particularly preferably the rotation of the shaft in a first direction longitudinally displaces the valve member in the body bore from the closed position to an open position of the flow control valve, and rotation of the shaft in an opposite second direction returns the valve member from the open position to the valve closed position.

Preferably the valve member further includes:
a first piston positioned at an opposite end of the valve member from the valve head; and
a second piston positioned between the seat engagement member and the at least one anti-spin feature of the valve head, the first and second pistons operating to seal against cylinder walls of the body as the valve member slidably moves in the body bore.

Particularly preferably the first and second pistons have substantially equal diameters such that a pressurized fluid acting oppositely against the first and second pistons results in balanced pressure forces acting on the valve member.

Preferably the flow control valve further comprises an electronic interface device receiving a command signal and converted by the electronic interface device to an output for operation of stepper motor.

Particularly preferably the flow control valve further includes an electronic interface housing having the electronic interface device disposed therein and an electrical connector sealing the electronic interface housing from the atmosphere and providing electrical connection for the flow control valve.

Preferably the valve member includes a resilient seal adjacent the valve head that slidably and sealingly engages the bore diameter of the body bore with a close tolerance fit to prevent fluid in the body bore from entering the head receiving cavity.

Preferably the shaft of the stepper motor is a male threaded shaft that is connected to and extends from the stepper motor such that incremental rotation of the stepper motor rotates the male threaded shaft within the threaded bore of the valve head to incrementally translate the valve member in an axial direction along the longitudinal axis.

Preferably the otherwise cylindrical surface of the valve head has a diameter that equals a diameter of the valve member adjacent the valve head.

Preferably the drive adapter is releasably connected to the body.

Preferably the drive adapter is integrally connected to the body and the valve head is slidably received in the head receiving cavity, the anti-spin feature of the valve head including two flat longitudinal faces on the otherwise cylindrical surface of the valve head and the drive adapter having two cavity faces that mate with the two flat longitudinal faces of the valve head to prevent rotation of the valve head about the longitudinal axis.

Preferably the seat engagement member is at least partially made of a resilient material.

Preferably the valve member has a poppet valve shape.

Preferably the valve member has a spool valve shape.

Preferably the valve member extends integrally from the valve head such that the valve head and the valve member are integrally connected with one another as part of the valve member.

Preferably the valve member is detached from the valve head and is held in contact with the valve head by a biasing component that biases the valve member toward the valve head.

Particularly preferably the biasing component is a spring disposed between the body of the flow control valve and an opposite end of the valve member from the valve head.

Viewed from a further aspect the present invention provides a flow control valve comprising:
a body having a body bore oriented coaxially with a longitudinal axis of the body,
the body bore having a bore diameter;
a valve member slidably disposed in the body bore and oriented coaxially with the longitudinal axis of the body, the valve member including:
   a valve head and a valve body portion that are disposed within the body bore adjacent one another, the valve head having a threaded bore created therein and
   a geometric shape defined by at least one flat longitudinal face on an otherwise cylindrical surface; and
   at least one seat engagement member that extends radially outwardly from the valve body portion and first and second pistons that are integrally connected with one another as part of the valve member, the first and second pistons having substantially equal diameters that create a close tolerance fit with the bore diameter such that a pressurized fluid acting oppositely against the first and second pistons is balanced;
   a drive adapter including a head receiving cavity slidingly receiving the valve head of the valve member, the head receiving cavity having a shape that compliments the geometric shape of the valve head to prevent axial rotation of the valve head within the head receiving cavity;
   a stepper motor connected to the drive adapter, the stepper motor rotating a shaft threadably engaged within the threaded bore of the valve head to move the valve member along the longitudinal axis in response to rotation of the shaft of the stepper motor; and
   an inlet port and an outlet port extending through the body from the body bore to a ported face of the body that are operably opened and closed by the at least one seat engagement member in response to movement of the valve member along the longitudinal axis.

Viewed from a yet further aspect the present invention provides flow control valve comprising:
a body having a body bore oriented coaxially with a longitudinal axis of the body and an end cap in contact with the body, the body bore having a bore diameter;
a valve member slidably disposed in the body bore and oriented coaxially with the longitudinal axis of the body, the valve member including:
   a non-circular geometrically shaped head and a body portion, the non-circular geometrically shaped head having a threaded bore created therein; and
   at least one radial outwardly extending seat engagement member and first and
   second pistons that are integrally connected with one another as part of the valve member, the first and second pistons having substantially equal diameters that create a close tolerance fit with the bore diameter such that a pressurized fluid acting oppositely against the first and second pistons is balanced;
   a drive adapter including a head receiving cavity slidingly receiving the non-circular geometrically shaped head of the valve member and preventing axial rotation of the valve member; and
   a stepper motor connected to the drive adapter, the stepper motor rotating a shaft directly engaged within the threaded bore of the valve member to axially translate the valve member.

Preferably the body is a 2-way valve body including:
a seat member extending into the body bore; and
an inlet port and an outlet port disposed on opposite sides of the seat member, the at least one radial outwardly extending seat engagement member contacting the seat member in a valve closed position isolating the inlet port from the outlet port.

Further areas of applicability will become apparent from the description provided herein. The description and specific examples in this summary are intended for purposes of illustration only and are not intended to limit the scope of the present disclosure.

The drawings described herein are for illustrative purposes only of selected embodiments and not all possible implementations, and are not intended to limit the scope of the present disclosure.
Figure 1 is a front left perspective view of a flow control valve of the present disclosure;
Figure 2 is an end elevational view of the flow control valve of Figure 1;
Figure 3 is a partial cross-sectional front elevational view taken at section 3 of Figure 2;
Figure 4 is the partial cross-sectional front elevational view of Figure 3 further showing the flow control valve in a valve open position;
Figure 5 is a cross-sectional end elevational view taken at section 5 of Figure 3;
Figure 6 is a partial cross-sectional front elevational view of another embodiment of a flow control valve of the present disclosure having a poppet valve member shown in a valve closed position;
Figure 7 is the partial cross-sectional front elevational view of Figure 6, further showing the poppet valve member in a valve open position;
Figure 8 is a partial cross-sectional front elevational view of a 3-way flow control valve of the present disclosure having a valve member shown in a fully exhausted position;
Figure 9 is the partial cross-sectional front elevational view of Figure 8 showing the flow control valve in a valve closed position;
Figure 10 is the partial cross-sectional front elevational view of Figure 8 showing the flow control valve in a valve open position;
Figure 11 is a partial cross-sectional front elevational view of a 4-way flow control valve of the present disclosure having a valve member shown in a valve first open position;
Figure 12 is the partial cross-sectional front elevational view of Figure 11 showing the flow control valve in a valve closed position;
Figure 13 is the partial cross-sectional front elevational view of Figure 11 showing the flow control valve in a valve second open position;
Figure 14 is a partial cross-sectional front elevational view similar to Figure 3 further showing an additional embodiment having an electronic interface device and housing;
Figure 15 is a front left perspective view of another flow control valve constructed in accordance with the present disclosure;
Figure 16 is a partial cross-sectional front elevational view illustrating one configuration of the flow control valve of Figure 15 where the flow control valve is shown in a valve closed position;
Figure 17 is the partial cross-sectional front elevational view of Figure 16 further showing the flow control valve in a valve open position;
Figure 18 is a partial cross-sectional front elevational view illustrating another configuration of the flow control valve of Figure 15 where the flow control valve is shown in a valve closed position;
Figure 19 is the partial cross-sectional front elevational view of Figure 18 further showing the flow control valve in a valve open position;
Figure 20 is a partial cross-sectional front elevational view illustrating another configuration of the flow control valve of Figure 15 where the flow control valve is shown in a valve closed position;
Figure 21 is the partial cross-sectional front elevational view of Figure 20 further showing the flow control valve in a valve open position;
Figure 22 is a partial cross-sectional front elevational view illustrating another configuration of the flow control valve of Figure 15 where the flow control valve is shown in a valve closed position;
Figure 23 is the partial cross-sectional front elevational view of Figure 22 further showing the flow control valve in a valve open position;
Figure 24 is a partial exploded perspective view of the geometrically shaped valve head and the head receiving recess of the flow control valves illustrated in Figures 15 - 23;
Figure 25 is a partial side elevational view of the geometrically shaped valve head of the flow control valve where the geometrically shaped valve head has an anti-spin feature in the shape of a groove; and
Figure 26 is a partial side elevational view of another geometrically shaped valve head of the flow control valve where the anti-spin feature is a concave longitudinal face.
Corresponding reference numerals indicate corresponding parts throughout the several views of the drawings.
Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

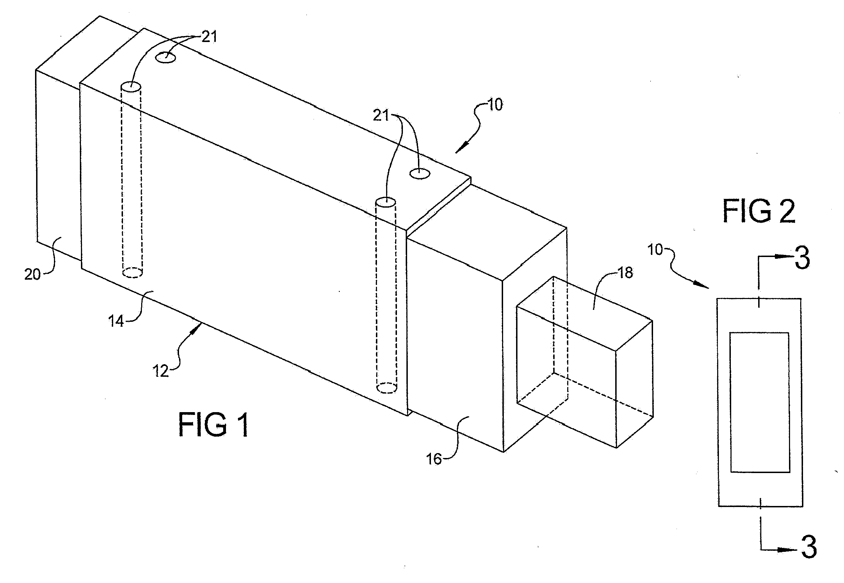

Referring to Figure 1, a flow control valve 10 includes a body assembly 12 having each of a main body portion 14, a drive adapter 16 which can be releasably connected to the main body portion 14, a valve actuator or operator in the form of a stepper motor 18 connected to the drive adapter 16, and an end cap 20 releasably connected to the main body portion 14 and oppositely positioned with respect to the stepper motor 18. According to further embodiments, drive adapter 16 can be an integral portion of main body portion 14. The main body portion 14 is represented as a block valve being substantially rectangular in shape allowing a plurality of the flow control valves 10 to be arranged in a side-by-side configuration, however, the disclosure is not limited to a specific valve body design. One or more through bores 21 can be provided in main body portion 14 to permit fastener mounting of flow control valve 10. Stepper motor 18 can be remotely energized from a power source (not shown).

Referring to Figure 2, flow control valve 10 as previously noted can have a substantially rectangular shape wherein each of the main body portion 14, the drive adapter 16, and the stepper motor 18 can have substantially equal widths to control an overall width of flow control valve 10. A height of each of the components such as the main body portion 14, or the stepper motor 18 can vary as required.

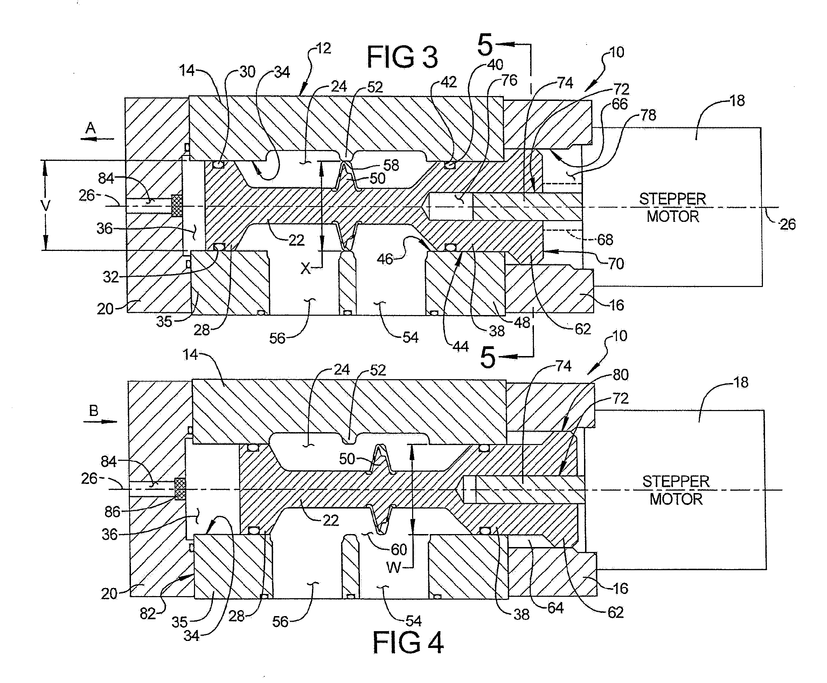

Referring to Figures 3 and 4, further features of flow control valve 10 include a valve member 22 which is slidably disposed within a valve receiving bore 24 of main body portion 14. The valve member 22 may have a variety of different configurations. For example and without limitation, the valve member 22 may have a spool valve shape, a poppet valve shape, or other similar valve shapes. Valve member 22 is coaxially translatable on an assembly longitudinal axis 26 of body assembly 12. Valve member 22 includes a first piston 28 having a first resilient seal member 30 such as an O-ring or a D-ring positioned in a first seal slot 32 which provides a fluid seal between the first piston 28 and a first cylinder wall 34 internally created within main body portion 14. Valve member 22 is slidably positionable in each of first direction "A" and an opposite second direction "B" by the driving force of stepper motor 18.

Main body portion 14 further includes a first body end 35 having first cylinder wall 34 created therein. First piston 28 is slidably received in a first piston bore 36 of first body end 35 defined by first cylinder wall 34. Valve member 22 can also include a second piston 38 having a second resilient seal member 40 similar to first resilient seal member 30 positioned in a second seal slot 42. Second resilient seal member 40 provides a fluid pressure boundary between a second piston perimeter wall 44 and a second cylinder wall 46 created in a second body end 48 of main body portion 14. According to several embodiments, a diameter "V" of first piston 28 is substantially equal to a diameter "W" of second piston 38. Further, a diameter "X" of a seat engagement member 50 is substantially equal to diameters "V" and "W", so that the directional forces from a pressurized fluid in valve receiving bore 24 will "balance" or act equally and oppositely against equal exposed surface areas of first piston 28 and seat engagement member 50 in a valve closed position (shown in Figure 3), and will balance against equal exposed surface areas of first and second pistons 28, 38 in a valve open position (shown in Figure 4). Valve member 22 and further valve members of the present disclosure are therefore defined as pressure balanced designs.

Seat engagement member 50 is an outward radial extension of valve member 22. As shown in Figure 3, valve member 22 can be positioned such that seat engagement member 50 contacts a seat member 52 of main body portion 14 in the valve closed position which isolates a pressurized fluid in an inlet port 54 from a first outlet port 56. According to several embodiments, seat engagement member 50 can be provided with a resilient material 58 over-molded onto seat engagement member 50. Resilient material 58 provides a glandular fluid seal when contacting seat member 52. When valve member 22 is moved in the second direction "B" (as shown in Figure 4 after full motion), a flow passage 60 is created between seat engagement member 50 and resilient material 58 of seat member 52 permitting pressurized fluid flow from inlet port 54 to the first outlet port 56.

Because an outer perimeter of seat engagement member 50 (defined by resilient material 58) and each of the first and second pistons 28, 38 have substantially equal diameters, valve member 22 is pressure balanced in either the valve closed or valve opened positions. For example, in the valve closed position shown in Figure 3 pressurized fluid acting against seat engagement member 50 in first direction "A" is equalized by the force of pressurized fluid acting on second piston 38 in second direction "B" so the net axial force acting on valve member 22 is substantially zero from the pressurized fluid. In the valve open position shown in Figure 4, a pressure balanced condition is also present when fluid is flowing through a partially to fully open flow control valve 10. When flow passage 60 is open as shown in Figure 4, a pressure differential exists between inlet port 54 and first outlet port 56, however, fluid pressure acting on first piston 28 in first direction "A" is substantially equal to the force of fluid pressure acting on a left hand side of seat engagement member 50, while fluid pressure acting on second piston 38 in second direction "B" is substantially equal to the force of fluid pressure acting on a right hand side of seat engagement member 50 such that the net axial force acting to translate valve member 22 is substantially zero.

Valve member 22 is coaxially translated with respect to assembly longitudinal axis 26 by a rotational force created by stepper motor 18. In order to convert the rotational force created by stepper motor 18 to a longitudinal or axial driving force, valve member 22 further includes a geometrically shaped head 62 positioned proximate to second piston 38 and at an opposite end of valve member 22 with respect to first piston 28. The term "geometrically shaped" head as defined herein refers to a geometric shape which is non-circular (i.e., cannot be completely circular). Shapes such as oval or a perimeter having at least one planar face and according to several embodiments multiple planar faces on the perimeter which can include triangular, rectangular, octagonal, and the like geometries can be used. According to several embodiments, geometrically shaped head 62 is substantially rectangular shaped which permits the valve member 22 to be created from rectangular shaped bar stock and machined or formed to provide the remaining features such as first and second pistons 28, 38 and seat engagement member 50.

Geometrically shaped head 62 is slidably received in a head receiving cavity 64 which can include a plurality of cavity faces 66 which mate with corresponding faces of geometrically shaped head 62. The non-circular geometry of geometrically shaped head 62 prevents axial rotation of valve member 22 with respect to assembly longitudinal axis 26 when driven by the rotational force of stepper motor 18. According to several embodiments, a biasing member 68 such as a compression spring can be received against an end face 70 of geometrically shaped head 62. An opposite end of biasing member 68 abuts stepper motor 18. Biasing member 68 applies a biasing force in the first direction "A" to valve member 22 to eliminate thread clearance between threads 72 of male threaded shaft 74 and a female threaded blind bore 76 created in second piston 38 so that valve member 22 can be repeatedly positioned to the open position by a predetermined number of rotations of stepper motor 18 which can vary with a pitch of threads 72.

A second head receiving cavity 78 is created between end face 70 of geometrically shaped head 62 and stepper motor 18. A volume of second head receiving cavity 78 varies as the valve member 22 translates in either of the first or second directions "A" or "B". A plurality of head faces 80 corresponding to a quantity of planar faces on the perimeter of geometrically shaped head 62 abut with individual ones of the cavity faces 66 to prevent axial rotation of valve member 22. Where non-planar faces are present on geometrically shaped head 62 such as when an oval shape is used, the shape of head receiving cavity 64 is shaped to match the perimeter shape of geometrically shaped head 62.

The male threaded shaft 74 can be directly or indirectly connected to and rotatably driven by stepper motor 18 and is directly threadably received in female threaded bore 76 coaxially aligned with respect to assembly longitudinal axis 26 in valve member 22. Rotation of male threaded shaft 74 therefore directly axially drives valve member 22 based on a quantity of complete or partial revolutions of male threaded shaft 74 which are predetermined to move between either of the valve open or valve closed positions. Valve member 22 axial position is repeatable based in part on the limited slip between the threads of male threaded shaft 74 and female threaded bore 76. Biasing member 68 further biases the valve member 22 to mitigate axial dimensional changes resulting from thread clearances and/or wear. In addition, the previously described pressure balanced design of valve member 22 substantially eliminates a net-axial-force acting on valve member 22 due to the pressurized fluid in any of the operating positions of flow control valve 10 to further enhance the repeatability of the position of valve member 22.

Main body portion 14 further includes a body end face 82 which is substantially planar and releasably receives the end cap 20, for example using fasteners (not shown). To vent fluid present in first piston bore 36 as first piston 28 axially translates, first piston bore 36 is in fluid communication with an end cap passage 84. End cap passage 84 can include a filter 86 to prevent influx of contaminants such as dirt or water into passage 24. Fluid such as air can thereby be drawn in or exhausted to equalize the fluid pressure in first piston bore 36 with atmospheric pressure for any axial position of valve member 22.

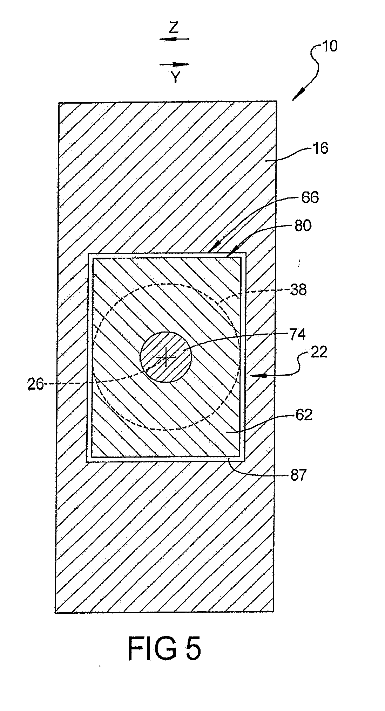

Referring to Figure 5, and as previously noted, geometrically shaped head 62 can be provided having a rectangular shape. The cavity faces 66 each correspond to one of the head faces 80 with a clearance gap 87 provided about a perimeter of geometrically shaped head 62. It should be evident from the geometry of geometrically shaped head 62 is shown in Figure 5 that axial rotation of male threaded shaft 74 with respect to assembly longitudinal axis 26 will not similarly rotate geometrically shaped head 62 or valve member 22. Clearance gap 87 can further be sized to permit fluid transfer about a perimeter of geometrically shaped head 62 as valve member 22 translates so that fluid pressure is substantially equalized in each of head receiving cavity 64 and second head receiving cavity 78 shown and described in reference to Figures 3 and 4.

In the configuration shown in Figure 5 and referring again to Figures 3 and 4, use of a right-handed thread on male threaded shaft 74 together with a clockwise first direction of rotation of male threaded shaft 74 by stepper motor 18 in a direction of rotation "Y" will pull valve member 22 toward the viewer as viewed in Figure 5 and in the first direction "A" as shown in Figure 3. An opposite or counterclockwise second direction of rotation of male threaded shaft 74 by stepper motor 18 in a direction of rotation "Z" will push valve member 22 away from the viewer as viewed in Figure 5 and in the second direction "B" as shown in Figure 4. It should be evident that use of a left-handed thread on male threaded shaft 74 (and for female threaded bore 76) can produce opposite directions of valve member travel.

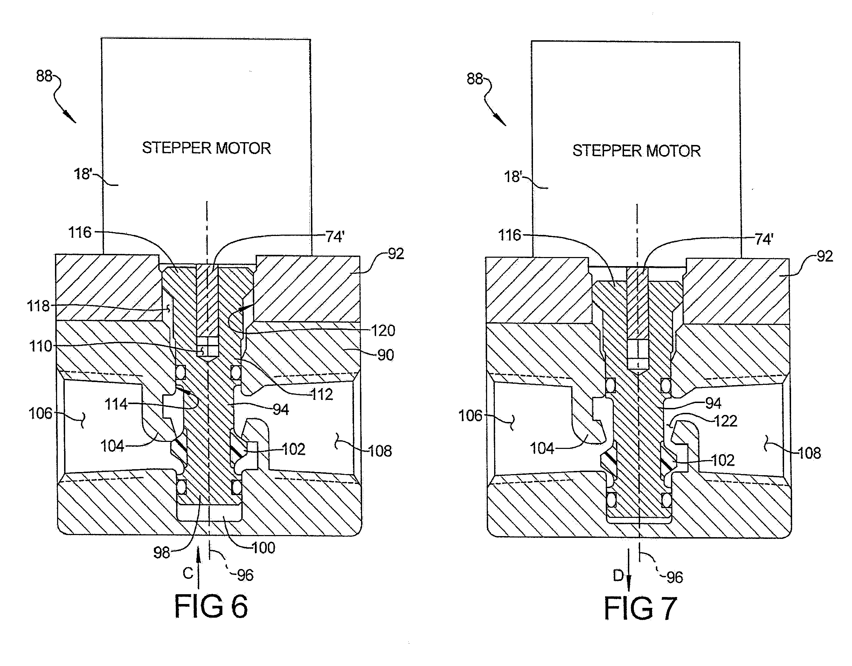

Referring to Figure 6 and again to Figures 3 and 4, according to other embodiments a flow control valve 88 using the drive features of the present disclosure can also be used for operating a poppet valve. Flow control valve 88 can include a valve body 90 having a drive adapter 92 similar to drive adapter 16 releasably connected thereto. Stepper motor 18' is similarly connected to drive adapter 92 having a male threaded shaft 74' axially extending therefrom. A poppet valve member 94 is slidably disposed on a longitudinal axis 96 of valve body 90. Poppet valve member 94 includes a first piston 98 slidably disposed and sealingly received in a first piston cavity 100 of valve body 90. Poppet valve member 94 can include an "overmolded" seat engagement member 102 having for example a material such as rubber or a polymeric resilient material overmolded (i.e., molded onto and extending outwardly from) the poppet valve member 94. Overmolded seat engagement member 102 sealingly contacts a valve member seat ring 104 in a valve closed position shown. In the valve closed position an inlet port 106 is isolated from an outlet port 108 to prevent fluid flow through flow control valve 88.

Referring to Figures 6 and 7, poppet valve member 94 further includes a female threaded bore 110 threadably receiving the male threaded shaft 74' of stepper motor 18'. Rotation of stepper motor of 18' therefore operates similar to the operation of stepper motor 18 described in reference to Figures 3and 4 above, to axially displace poppet valve member 94 in a valve closing direction "C" to reach the valve closed position. Poppet valve member 94 further includes a second piston 112 which has a diameter substantially equal to a diameter of first piston 98. In the valve closed position shown in Figure 6 pressurized fluid acting against seat engagement member 102 in closing direction "C" is equalized by the force of pressurized fluid acting on first piston 98 in a valve opening direction "D" so the net axial force acting on poppet valve member 94 is substantially zero from the pressurized fluid.

Second piston 112 is slidably disposed with respect to a second cylinder wall 114 of valve body 90. A geometrically shaped head 116 is created on an end of poppet valve member 94 oppositely positioned with respect to first piston 98. Geometrically shaped head 116 is slidably received in a head receiving cavity 118 which can include a plurality of cavity faces 120 corresponding to the geometric shaped planar faces (or non-planar geometry) of geometrically shaped head 116. Geometrically shaped head 116 in contact with the plurality of cavity faces 120 therefore prevents rotation of poppet valve member 94 during axial translation of poppet valve member 94. For the same reasons previously noted with respect to the embodiment of Figures 3 and 4, geometrically shaped head 116 can also be oval shaped, or include a single or multiple planar surfaces on its perimeter to prevent axial rotation of poppet valve member 94.

Referring more specifically to Figure 7, a valve open position of fluid control valve 88 is provided when stepper motor 18' is rotated in an opposite axial rotation direction compared to the rotation to achieve the closed position shown in reference to Figure 6. As poppet valve member 94 axially displaces in valve opening direction "D" and overmolded seat engagement member 102 displaces from valve member seat ring 104, a flow passage 122 is created which permits flow from inlet port 106 to outlet port 108. Because first and second pistons 98, 112 of poppet valve member 94 have substantially equivalent diameters, the pressure forces acting on poppet valve member 94 are balanced when the flow control valve 88 is in a partially to fully open flow control valve 88 as follows. In the valve open position, flow passage 122 is open and a pressure differential exists between inlet port 106 and outlet port 108, however, fluid pressure acting on first piston 98 in opening direction "D" is substantially equal to the force of fluid pressure acting on a downward facing side of seat engagement member 102 (directed in closing direction "C"), while fluid pressure acting on second piston 112 in closing direction "C" is substantially equal to the force of fluid pressure acting on an upward facing side of seat engagement member 102 (directed in opening direction "D") such that the net axial force acting to translate valve member 94 is substantially zero. This pressure balance reduces the amount of force required by stepper motor 18' to return the valve to a valve closed position and also when the valve is positioned in the closed and/or in any partially open position.

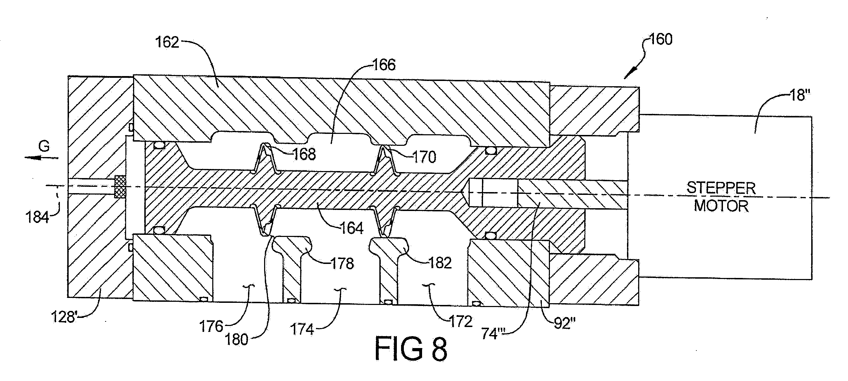

Referring to Figure 8, according to other embodiments a flow control valve 160 includes a 3-way valve body 162 modified from the flow control valve 124 shown and described with reference to Figures 3 and 4 to include additional overmolded seat engagement members and seat members, therefore only the differences will be further described herein. A valve member 164 is slidably disposed in a valve receiving bore 166 and includes a first overmolded seat engagement member 168 and a second overmolded seat engagement member 170. In an exhaust position of flow control valve 160 an inlet port 172 is closed to an outlet port 174 and an exhaust port 176. Outlet port 174 is open to exhaust port 176. The first overmolded seat engagement member 168 is displaced from a first seat member 178 thereby creating a first flow passage 180 for fluid communication between outlet port 174 and exhaust port 176. Second overmolded seat engagement member 170 contacts a second seat member 182 in the fully exhausted position. Valve member 164 is fully displaced in a first direction "G" to achieve the exhaust position by rotation of a male threaded shaft 76'" using stepper motor 18".

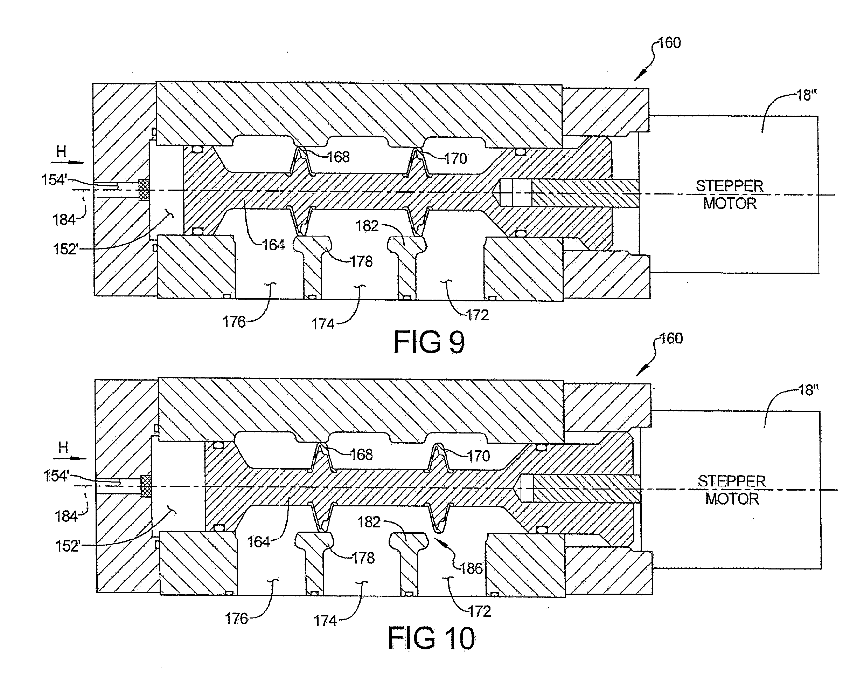

Referring to Figure 9 and again to Figure 8, a closed position of flow control valve 160 is created by translation of valve member 164 in a second direction "H" opposite to first direction "G" until first and second overmolded seat engagement members 168, 170 contact first seat member 178 and second seat member 182 respectively. In the valve closed position the inlet port 172, the outlet port 174, and the exhaust port 176 are closed to each other having no common flow paths therebetween. As valve member 164 translates in the second direction "H", air is drawn into vent aperture 154' to equalize atmospheric pressure in first piston bore 152'.

Referring to Figure 10, an open position of flow control valve 160 is created by further translation of valve member 164 from the closed position in the second direction "H" until second overmolded seat engagement member 170 displaces with respect to second seat member 182, thereby creating a second flow passage 186. Second flow passage 186 provides fluid communication between inlet port 172 and outlet port 174 while exhaust port 176 is closed to both inlet port 172 and outlet port 174 by contact between first overmolded seat engagement member 168 and first seat member 178. For the same reasons previously discussed herein, valve member 164 is a pressure balanced design so that fluid pressure forces acting on valve member 164 are balanced in all operating positions of flow control valve 160.

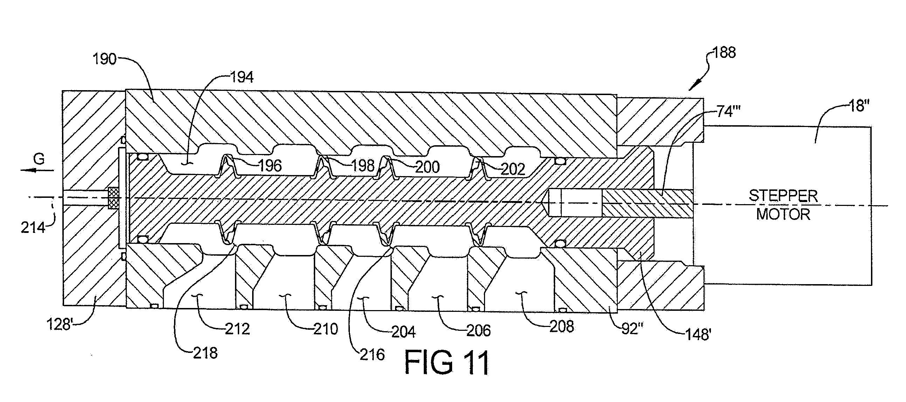

Referring to Figure 11, a flow control valve 188 is modified from flow control valve 160 shown and described in reference to Figures 8-10 by the addition of further valve ports and valve seat members. Flow control valve 188 includes a 4-way valve body 190 having a valve member 192 slidably positioned within a valve receiving bore 194 of 4-way valve body 190. The valve member 192 includes a first, second, third, and fourth overmolded seat engagement member 196, 198, 200, and 202. 4-way valve body 190 further includes each of an inlet port 204, a first outlet port 206, a first exhaust port 208, a second outlet port 210, and a second exhaust port 212. The valve member 192 is slidably disposed on a longitudinal axis 214.

In a first open position of flow control valve 188, valve member 192 is slidably disposed in the first direction "G" to a maximum extent by operating stepper motor 18" to rotate male threaded shaft 74"'. Axial rotation of valve member 192 is precluded by the geometric shape of drive adapter 92" which non-rotatably receives geometrically shaped head 148'. In the first open position, inlet port 204 is in open to first outlet port 206 and both are closed to first exhaust port 208. A first flow passage 216 is created proximate to third overmolded seat engagement member 200 to permit fluid flow from inlet port 204 through first outlet port 206. Also in the first open position of flow control valve 188, a first exhaust passage 218 is created by displacement of first overmolded seat engagement member 196 while second overmolded seat engagement member 198 is retained in a sealing condition. First exhaust passage 218 provides for fluid communication between second outlet port 210 and second exhaust port 212, while inlet port 204 is closed to both second outlet port 210 and second exhaust port 212.

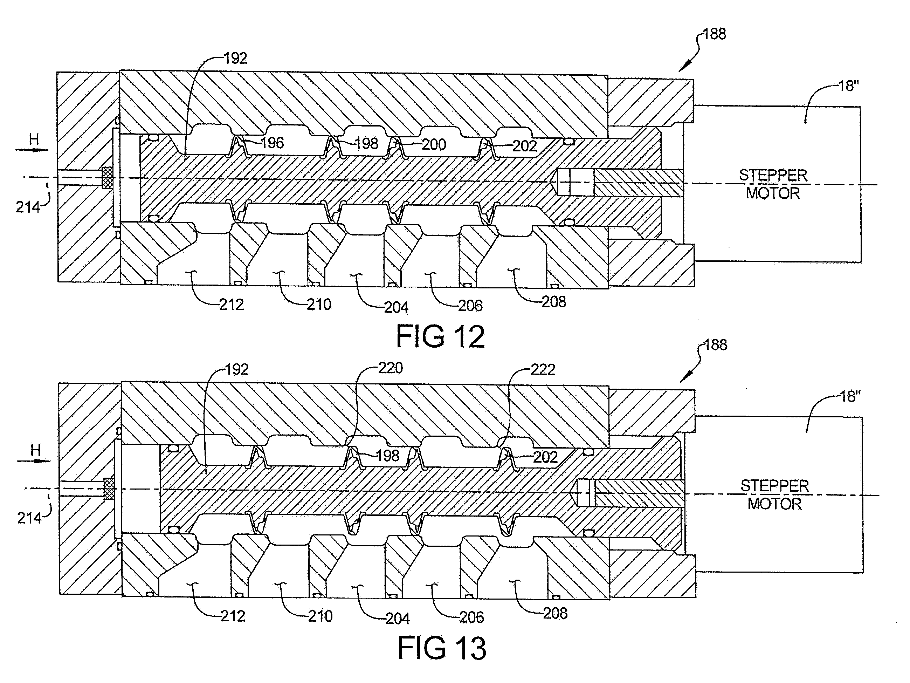

Referring to Figure 12 and again to Figure 11, a closed position of flow control valve 188 is created by translating valve member 192 in a second direction "H", which is opposite to the first direction "G", until all of the first, second, third, and fourth overmolded seat engagement members 196, 198, 200, 202 are positioned in seated and sealed conditions. In the closed position of flow control valve 188, all of the individual ports are closed to each other preventing any discharge flow of fluid from inlet port 204 to any of the outlet ports.

Referring to Figure 13, a second open position of flow control valve 188 is created by further axial translation of valve member 192 in the second direction "H" until second overmolded seat engagement member 198 and fourth overmolded seat engagement member 202 are displaced from their seated positions. A second flow passage 220 created proximate to second overmolded seat engagement member 198 provides for fluid communication between inlet port 204 and second outlet port 210. Second exhaust port 212 is closed to both inlet port 204 and second outlet port 210 in the second open position. Also in the second open position, a second exhaust passage 222 is created proximate to fourth overmolded seat engagement member 202. Second exhaust passage 222 provides for fluid communication between first outlet port 206 and first exhaust port 208 while fluid pressure in inlet port 204 is closed to both first outlet port 206 and first exhaust port 208. For the same reasons previously described herein, valve member 192 provides a pressure balanced design such that fluid pressure forces acting on the valve member 192 are balanced in all operating positions of flow control valve 188.

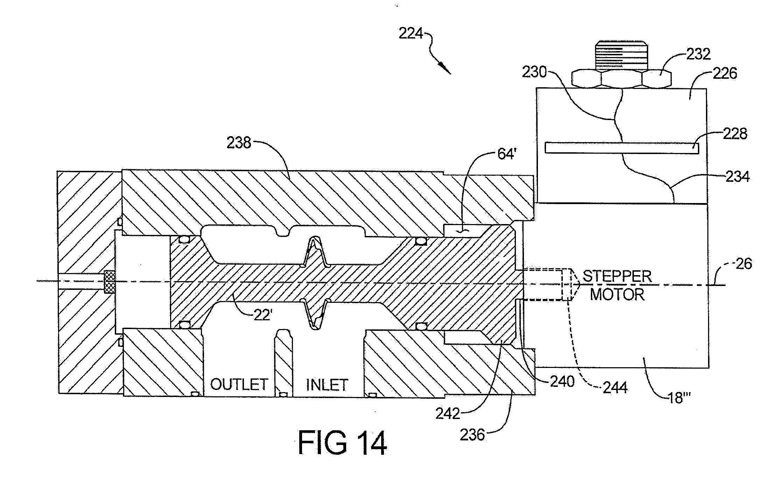

Referring to Figure 14, a flow control valve 224 includes an electronic interface housing 226 having an electronic interface device 228 which receives an operating command signal such as an analog or a digital signal, or a voltage or current via a control line 230. Control line 230 is connected through an electrical connector 232 which seals electronic interface housing 226 from the atmosphere and provides for connection to an electrical power source for operation of flow control valve 224. The command signal received by electronic interface device 228 is converted as necessary to an output required for operation of stepper motor 18"' and transmitted via a second control line 234 to stepper motor 18"' to cause rotation of stepper motor 18"' and thereby axial translation of valve member 22'. A drive adapter 236 in flow control valve 224 is an integral portion of a main body portion 238. A male threaded extension 240 extends away from a geometrically shaped head 242 of valve member 22'. Extension 240 can be an integral portion of geometrically shaped head 242, or can be a male threaded fastener threadably coupled to geometrically shaped head 242. Extension 240 is threadably received in a bore 244 of stepper motor 18"' which can be a female threaded bore. Rotation of stepper motor 18"' co-rotates the motor portion containing bore 244 which threadably engages extension 240 to axially translate valve member 22'.

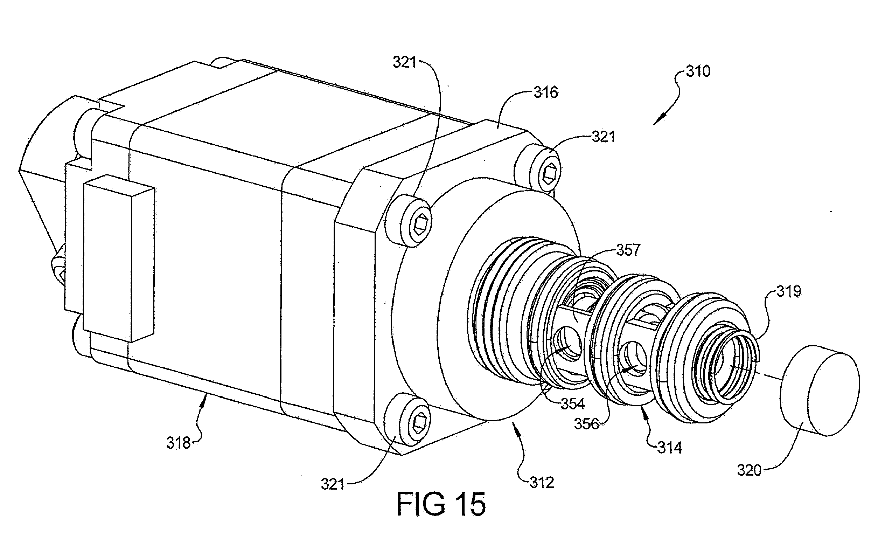

Referring to Figure 15, a flow control valve 310 includes a body 312 having a main body portion 314, a drive adapter 316 which can be releasably connected to the main body portion 314, and a valve actuator or operator in the form of a stepper motor 318 that is connected to the drive adapter 316. Optionally, a biasing element or spring 319 may be provided adjacent the main body portion 314 that is oppositely positioned with respect to the stepper motor 318. An end cap 320 may also be provided that is releasably connected to the main body portion 314. The end cap 320 is disposed over the biasing element 319 such that the biasing element 319 extends between the main body portion 314 and the end cap 320. According to further embodiments, drive adapter 316 can be an integral portion of main body portion 314. The main body portion 314 is represented as having a substantially cylindrical shape allowing a plurality of the flow control valves 310 to be arranged in a side-by-side relationship; however, the disclosure is not limited to a specific valve body design. It should also be appreciated that the body 312 of the flow control valve 310 may be received in a valve block (not shown) that includes one or more fluid passageways. One or more fasteners 321 can be provided that couple the drive adapter 316 to the stepper motor 318. Further, it should be appreciated that stepper motor 318 can be remotely energized from a power source (not shown).

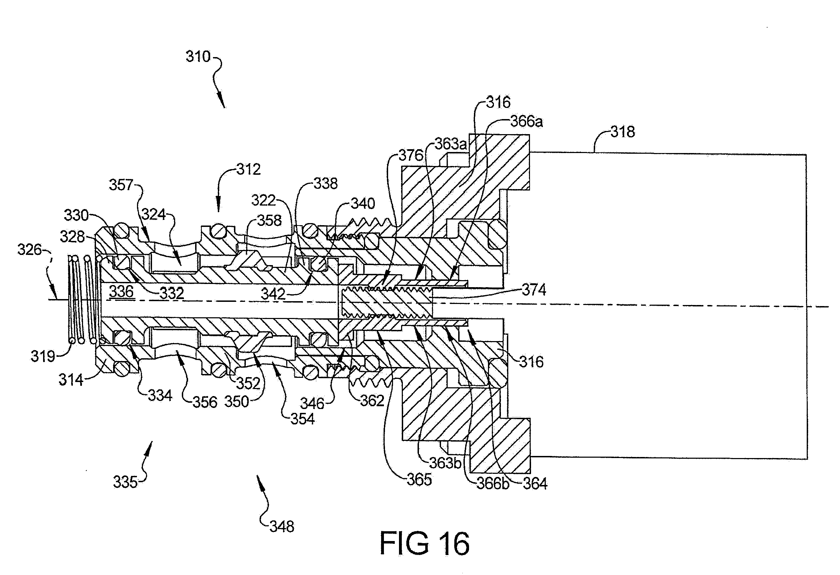

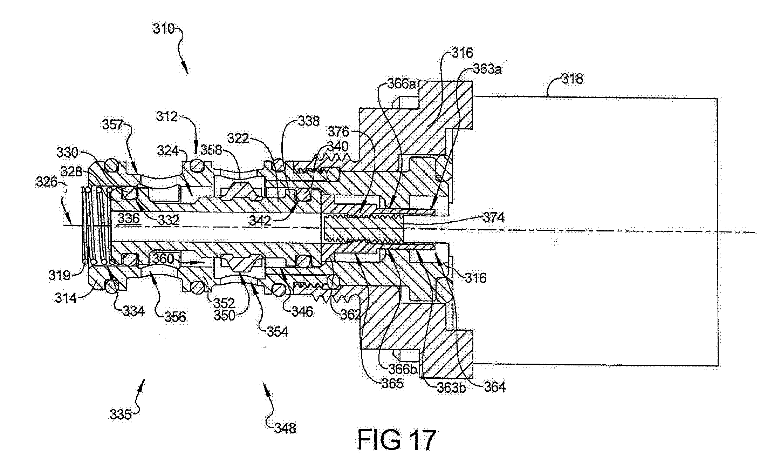

Referring to Figures 16 and 17, the flow control valve 310 also includes a valve member 322, which is slidably disposed within a body bore 324 of main body portion 314. Again, the valve member 322 may have a variety of shapes, including without limitation, a spool valve shape or a poppet valve shape. Valve member 322 is moveable along a longitudinal axis 326 of body 312. Valve member 322 includes a first piston 328 having a first resilient seal member 330 such as an O-ring or a D-ring positioned in a first seal slot 332 which provides a fluid seal between the first piston 328 and a first cylinder wall 334. The first cylinder wall 334 is internally created within main body portion 314. Valve member 322 is slidably positionable in a first direction and an opposite second direction by the driving force of stepper motor 318.

Main body portion 314 further includes a first body end 335 having the first cylinder wall 334 created therein. First piston 328 is slidably received in a first piston bore 336 of first body end 335 defined by first cylinder wall 334. Valve member 322 can also include a second piston 338 having a second resilient seal member 340 similar to first resilient seal member 330 positioned in a second seal slot 342. Second resilient seal member 340 provides a fluid pressure boundary between the second piston 338 and a second cylinder wall 346 created in a second body end 348 of main body portion 314. According to several embodiments, a diameter of first piston 328 is substantially equal to a diameter of second piston 338, so that the directional forces from a pressurized fluid in the body bore 324 will "balance" or act equally and oppositely against equal exposed surface areas of first piston 328 and the second pistons 338. The valve member 322 of the present disclosure are therefore defined as pressure balanced designs.

Seat engagement member 350 is an outward radial extension of valve member 322. As shown in Figure 16, the valve member 322 can be positioned such that the seat engagement member 350 contacts a seat member 352 of main body portion 314 in the valve closed position, which isolates a pressurized fluid in an inlet port 354 from an outlet port 356. The inlet port 354 and the outlet port 356 extend through the main body portion 314 from the body bore 324 to a ported face 357 of the main body portion 314. According to several embodiments, seat engagement member 350 can be provided with a resilient material 358 over-molded onto seat engagement member 350. Resilient material 358 provides a glandular fluid seal when contacting seat member 352. When valve member 322 is moved in the second direction (as shown in Figure 17 after full motion), a flow passage 360 is created between seat engagement member 350 and resilient material 358 of seat member 352 permitting pressurized fluid flow from inlet port 354 to the first outlet port 356.

The valve member 322 is pressure balanced in either the valve closed (Figure 16) or valve opened positions (Figure 17). For example, in the valve closed position shown in Figure 16, pressurized fluid acting against seat engagement member 350 is equalized by the force of pressurized fluid acting on second piston 238 so the net axial force acting on valve member 322 is substantially zero from the pressurized fluid. In the valve open position shown in Figure 17, a pressure balanced condition is also present when fluid is flowing through a partially to fully open flow control valve 310. When flow passage 360 is open as shown in Figure 17, a pressure differential exists between inlet port 354 and first outlet port 356, however, fluid pressure acting on first piston 328 is substantially equal to the force of fluid pressure acting on a left hand side of seat engagement member 350, while fluid pressure acting on second piston 338 is substantially equal to the force of fluid pressure acting on a right hand side of seat engagement member 350 such that the net axial force acting to translate valve member 322 is substantially zero.

Valve member 322 is coaxially translated with respect to the longitudinal axis 326 by a rotational force created by stepper motor 318. In order to convert the rotational force created by stepper motor 318 to a longitudinal or axial driving force, the flow control valve 310 further includes a geometrically shaped valve head 362 positioned proximate to second piston 338 of the valve member 322 and at an opposite end of valve member 322 with respect to first piston 328. According to several embodiments, the geometrically shaped valve head 362 is defined by at least one anti-spin feature 363a, 363b disposed along an otherwise cylindrical surface 365. In Figures 16 and 17, the anti-spin feature 363a, 363b includes at least one flat longitudinal face 363a, 363b, which more particularly includes two flat longitudinal faces 363a, 363b that are diametrically disposed on the geometrically shaped valve head 362. The otherwise cylindrical surface 365 of the geometrically shaped valve head 362 thus extends between the two flat longitudinal faces 363a, 363b in Figures 16 and 17.

The geometrically shaped valve head 362 is slidably received in a head receiving cavity 364 disposed in the drive adapter 316. The drive adapter 316 may have a two piece construction as shown in Figures 16 and 17, where one of the pieces defines the head receiving cavity 364 and the other piece is fastened to the stepper motor 318. In such a configuration, seals may be provided between the drive adapter 316 and the second body end 348 and between the drive adapter 316 and the stepper motor 318. However, it should be appreciated that alternative configurations are possible. For example, the drive adapter 316 may alternatively have a single piece construction (as shown in Figures 3 and 4). The head receiving cavity 364 is shaped to match the geometric shape of the geometrically shaped valve head 362 and can include at least one cavity face 366a, 366b that mates with the at least one anti-spin feature 363a, 363b of the geometrically shaped valve head 362. In Figures 16 and 17, the at least one cavity face 366a, 366b of the head receiving cavity 364 more particularly includes two cavity faces 366a, 366b that mate with the two flat longitudinal faces 363a, 363b, respectively. The two flat longitudinal faces 363a, 363b of the geometrically shaped valve head 362 and the two cavity faces 366a, 366b prevent axial rotation of the geometrically shaped valve head 362 with respect to the longitudinal axis 326 when driven by the rotational force of stepper motor 318.

The stepper motor 318 may include a male threaded shaft 374 that is threadably received in a female threaded bore 376 created in the geometrically shaped valve head 362. The male threaded shaft 374 can be directly or indirectly connected to and rotatably driven by stepper motor 318. The male threaded shaft 374 is directly threadably received in female threaded bore 376 and is coaxially aligned with respect to the longitudinal axis 326 of the valve member 322. Rotation of male threaded shaft 374 therefore directly axially drives the geometrically shaped valve head 362 based on a quantity of complete or partial revolutions of male threaded shaft 374, which are predetermined to move between either of the valve open or valve closed positions and can vary with a pitch of threads on the male threaded shaft 374 and the female threaded bore 376. As shown in Figures 16 and 17, the geometrically shaped valve head 362 may be detached (i.e. separate) from the valve member 322. Notwithstanding, the geometrically shaped head 362 abuts the valve member 322 such that the geometrically shaped valve head 362 drives the valve member 322 between the open position and the closed position. It should be appreciated that where the geometrically shaped valve head 362 is detached from the valve member 322, the biasing member 319 presses against the first piston 328 of the valve member 322 and therefore helps maintain contact between the valve member 322 and the geometrically shaped valve head 362.

The axial position of the valve member 322 is repeatable based in part on the limited slip between the threads of male threaded shaft 374 and female threaded bore 376. Biasing member 319 also biases the valve member 322 and thus the geometrically shaped valve head 362 to mitigate axial dimensional changes resulting from thread clearances and/or wear. In addition, the previously described pressure balanced design of valve member 322 substantially eliminates a net-axial-force acting on valve member 322 due to the pressurized fluid in any of the operating positions of flow control valve 310 to further enhance the repeatability of the position of valve member 322.

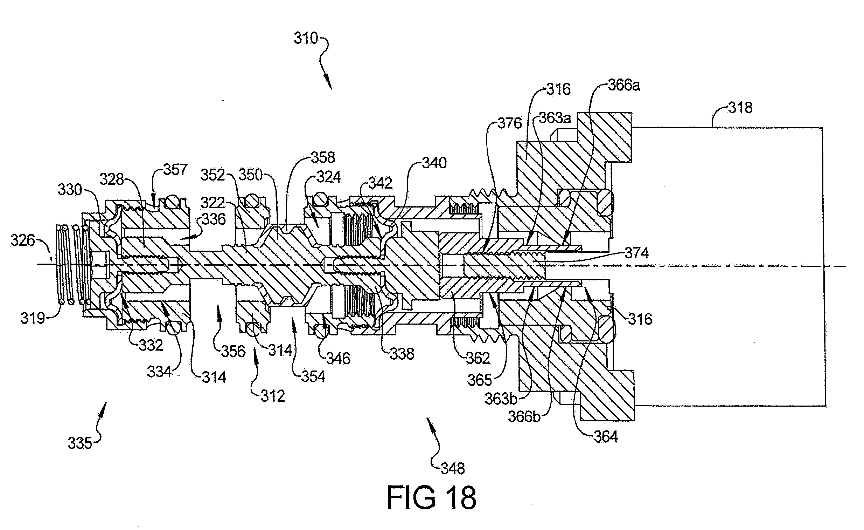

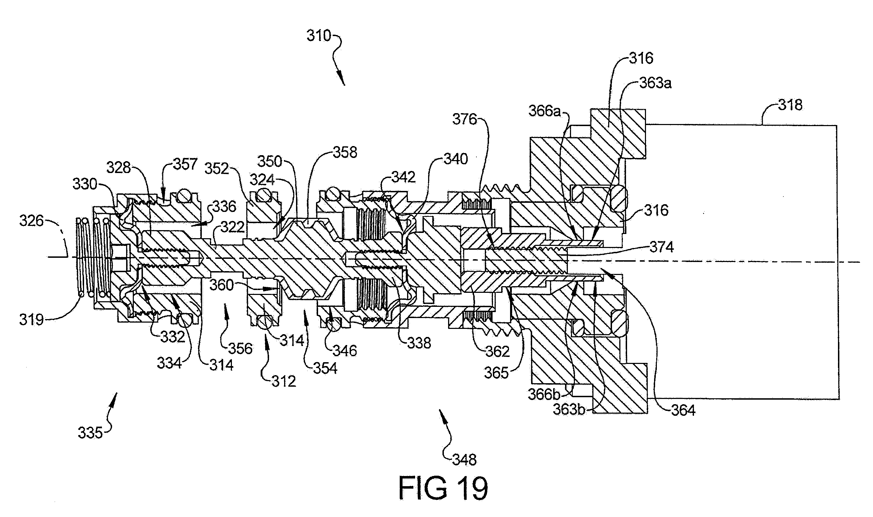

With reference to Figures 18 and 19, an adaptation of the flow control valve 310 of Figures 16 and 17 is illustrated. Like in Figures 16 and 17, the flow control valve 310 of Figures 18 and 19 includes a geometrically shaped valve head 362 that is detached from the valve member 322. However, the valve member 322 shown in Figures 18 and 19 differs in that the first and second pistons 328, 338 are spaced radially inwardly of the first cylinder wall 334 and the second cylinder wall 346. Accordingly, the first and second resilient seal members 330, 340 are radially elongated to form a diaphragm structure. The first and second resilient seal members 330, 340 in Figures 18 and 19 do not move with the valve member 322 and therefore do not slide along the first and second cylinder walls 334, 346 like in Figures 16 and 17. Instead, the ends of the first and second resilient seal members 330, 340 in Figures 18 and 19 are seated in the first and second seal slots 332, 342 of the valve member 322 and are secured to the main body portion 314 between the inlet port 354 and the drive adapter 316. As the stepper motor 318 drives the valve member 322 between the closed position (Figure 18) and the open position (Figure 19), the first and second resilient seal members 330, 340 flex to accommodate the translation of the valve member 322. To facilitate installation of the first and second resilient seal members 330, 340, the valve member 322 may have a three piece construction including a middle segment and two ends. As shown in Figures 18 and 19, the seat engagement member 350 extends radially outwardly from the middle segment and the two ends are attached to the middle segment by threaded connections. The first and second seal slots 332, 342 are disposed between the two ends and the middle segment of the valve member 322. The threaded connections between the two ends and the middle segment of the valve member 322 function to clamp the first and second resilient seal members 330, 340 to the valve member 322. In a similar fashion, the body 312 may have a three piece construction including the main body portion 314 and the two body ends 335, 348. The main body portion 314 defines the inlet and outlet ports 354, 356 of the body 312, the first body end 335 is disposed between the main body portion 314 and the biasing member 319, and the second body end 348 is disposed between the main body portion 314 and the driver adapter 316. As shown in Figures 18 and 19, the two body ends 335, 348 are attached to the main body portion 314 by threaded connections. The first and second resilient seal members 330, 340 are disposed between the two body ends 335, 348 and the main body portion 314 and the threaded connections between the two body ends 335, 348 and the main body portion 314 function to clamp the first and second resilient seal members 330, 340 to the body 312 of the flow control valve 310.

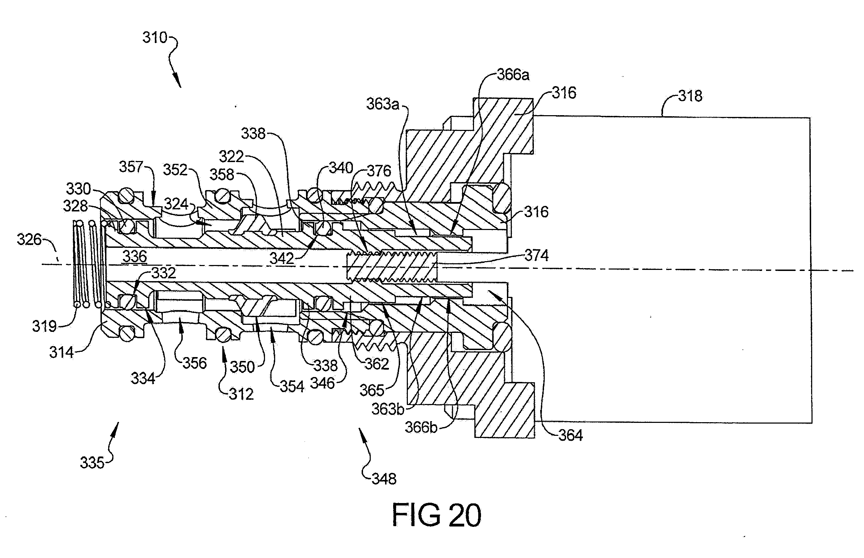

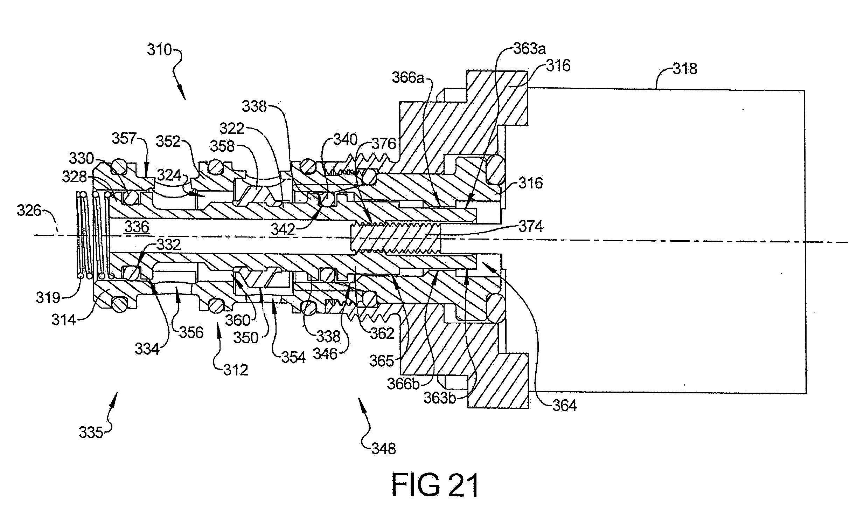

With reference to Figures 20 and 21, another adaptation of the flow control valve 310 of Figures 16 and 17 is illustrated. The structure of the body 312, the adapter 316, and the stepper motor 318 in Figures 20 and 21 is the same as that shown in Figures 16 and 17. However, the flow control valve 310 of Figures 20 and 21 differs in that the geometrically shaped valve head 362 is integral with the valve member 322, instead of being detached like in Figures 16 and 17. As Figures 20 and 21 illustrate, the geometrically shaped valve head 362 extends from the second piston 338 of the valve member 322. Again, the geometrically shaped valve head 362 includes two flat longitudinal faces 363a, 363b. The drive adapter 316 defines the head receiving cavity 364, which has two cavity faces 366a, 366b that mate with the two flat longitudinal faces 363a, 363b of the geometrically shaped valve head 362 to prevent rotation of the geometrically shaped valve head 362 about the longitudinal axis 326. Because the geometrically shaped valve head 362 is integral with the valve member 322, the two flat longitudinal faces 363a, 363b of the geometrically shaped valve head 362 and the two cavity faces 366a, 366b also prevent rotation of the valve member 322 about the longitudinal axis 326 as the stepper motor 318 translates the valve member 322 between the closed position (Figure 20) and the open position (Figure 21). By contrast, the valve member 322 in Figures 16 - 19 is detached from the geometrically shaped valve head 362 such that the valve member in Figures 16 - 19 can rotate about the longitudinal axis 326 independent of the geometrically shaped valve head 362, which cannot rotate because of the interaction of the two flat longitudinal faces 363a, 363b and the two cavity faces 366a, 366b. It should also be appreciated that the biasing member 319 in Figures 20 and 21 may be eliminated because the biasing member 319 is no longer needed to hold the valve member 322 in an abutting relationship with the geometrically shaped valve head 362. Since the valve member 322 is part of the geometrically shaped valve head 362, these two elements of the flow control valve 310 shown in Figures 20 and 21 necessarily move together. However, the biasing member may still be provided to mitigate axial dimensional changes resulting from thread clearance or wear between the male threaded shaft 374 and the female threaded bore 376.

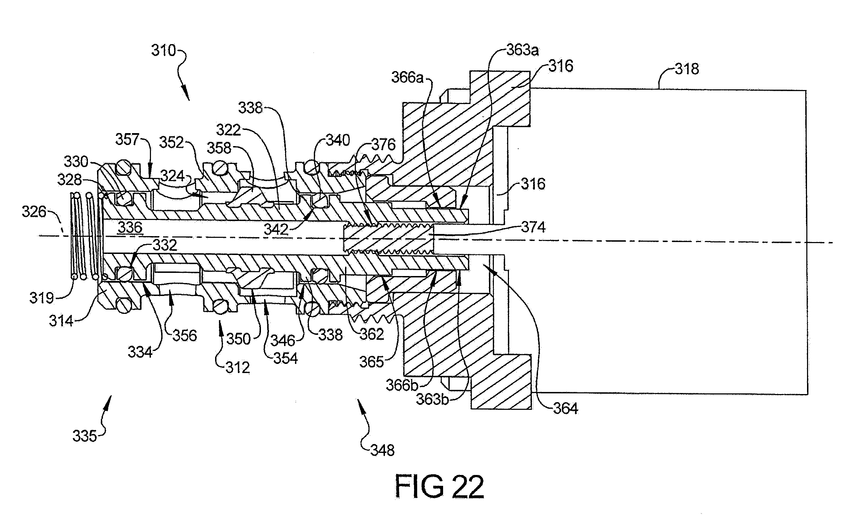

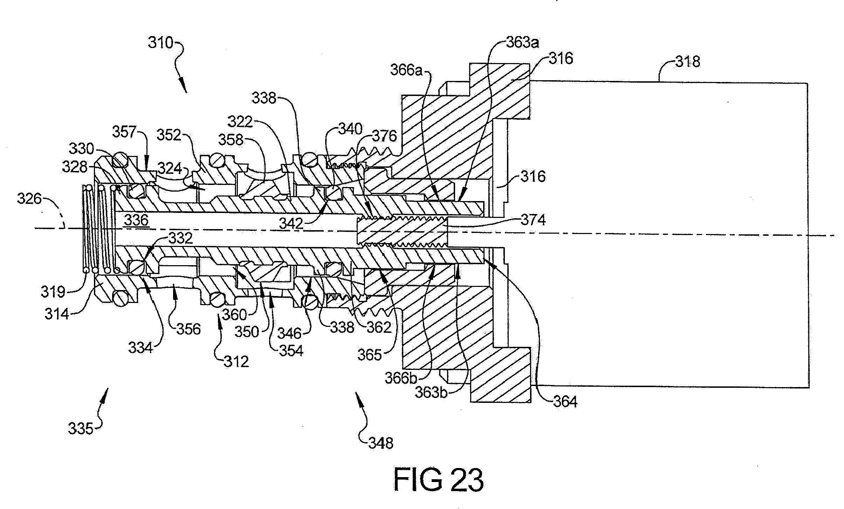

With reference to Figures 22 and 23, an adaption of the flow control valve 310 of Figures 20 and 21 is illustrated. The structure of the body 312, stepper motor 318, valve member 322, and geometrically shaped valve head 362 in Figures 22 and 23 is the same as those shown in Figures 20 and 21. Accordingly, the valve member 322 is integral with the geometrically shaped valve head 362 such that the geometrically shaped valve head 362 moves together with the valve member 322 between the closed position (Figure 22) and the open position (Figure 23). However, the flow control valve 310 of Figures 22 and 23 differs in that the drive adaptor 316 has been modified. Although the drive adaptor 316 in Figures 22 and 23 still has a two piece construction, the seal between the drive adapter 316 and the second body end 348 and the seal between the drive adapter 316 and the stepper motor 318 have been eliminated.

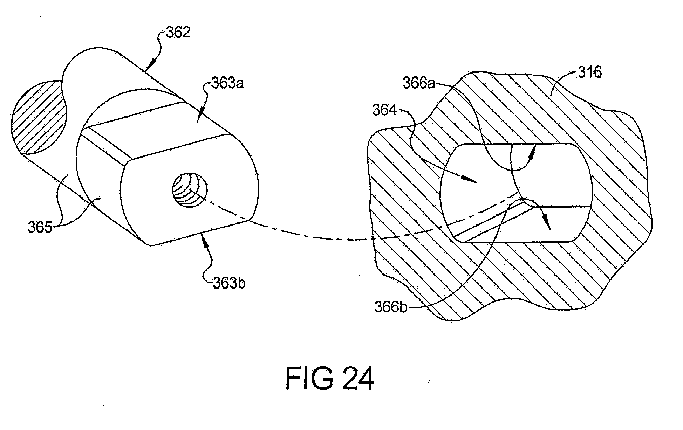

With reference to Figure 24, the geometrically shaped valve head 362 and the head receiving cavity 364 defined by the drive adapter 316 are illustrated. From this partial exploded view, it can be appreciated that the two flat longitudinal faces 363a, 363b of the geometrically shaped valve head 362 slidingly engage the two cavity faces 366a, 366b when the geometrically shaped valve head 362 is received within the head receiving cavity 364. Accordingly, the geometric shape of the geometrically shaped valve head 362 and the matching shape of the head receiving cavity 364 allow the geometrically shaped valve head 362 to slide coaxially along the longitudinal axis 326 while preventing the geometrically shaped valve head 362 from rotating about the longitudinal axis 326 relative to the drive adapter 316 and thus the stepper motor 318. This helps ensure proper and repeatable translation of the valve member 322 between the closed position and the open position because all of the rotational motion of the stepper motor 318 is converted to axial motion of the geometrically shaped valve head 362 along the longitudinal axis 326.

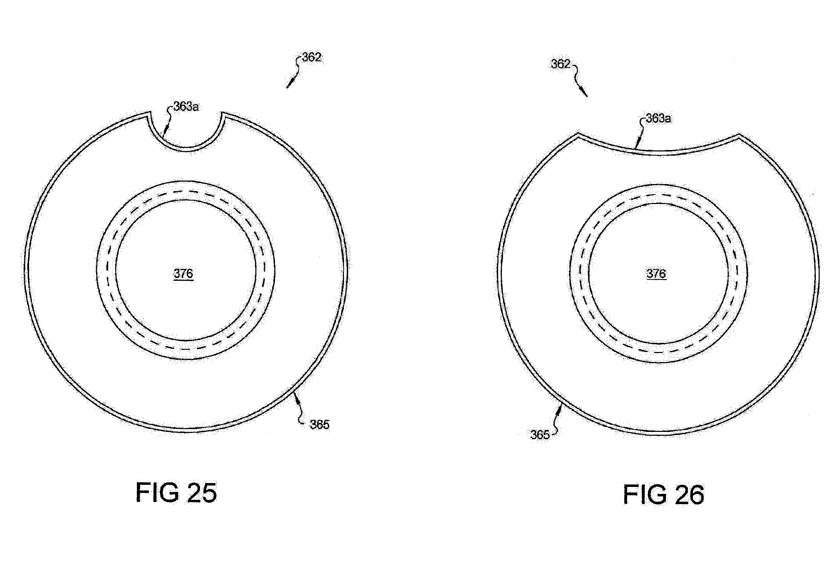

It should be appreciated that the geometrically shaped valve head 362 may have a different number of flat longitudinal faces than the two flat longitudinal faces 363a, 363b shown in Figures 16-24. For example, a single flat longitudinal face may be used, or alternatively, more than two flat longitudinal faces may be provided on the otherwise cylindrical surface 365. Further, other forms of the at least one anti-spin feature 363a, 363b may be employed. With reference to Figure 25, the at least one anti-spin feature 363a is in the form of a groove 363a that extends inwardly into the geometrically shaped valve head 362 from the otherwise cylindrical surface 365 and toward the female threaded bore 376. It should be appreciated that the geometry of the head receiving cavity 364 matches that of the geometrically shaped valve head 362 such that the geometrically shaped valve head 362 cannot rotate within the head receiving cavity 364. Stated another way, geometry of the head receiving cavity 364 may include a projection extending from the drive adapter 316 into the head receiving cavity 364 that is received in and that engages the anti-spin feature 363a of the geometrically shaped valve head 362 to prevent rotation of the geometrically shaped valve head 362 relative to the drive adapter 316. Of course, this configuration may be reversed, where the anti-spin feature 363a is a projection extending outwardly from the otherwise cylindrical surface 365 and the geometry of the head receiving cavity 364 includes a groove that receives the anti-spin feature 363a of the geometrically shaped valve head 362.

With reference to Figure 26, the at least one anti-spin feature 363a may alternatively have the form of a concave longitudinal face 363a disposed along the otherwise cylindrical surface 365 of the geometrically shaped valve head 362. The geometry of the head receiving cavity 364 again matches that of the geometrically shaped valve head 362 such that the geometrically shaped valve head 362 cannot rotate within the head receiving cavity 364. More specifically, the one or more cavity faces 366a, 366b of the head receiving cavity 364 may be complimentary in shape to the concave longitudinal face 363a. This complimentary cavity face of the head receiving cavity 364 abuts the concave longitudinal face 363a of the geometrically shaped valve head 362 to prevent rotation of the geometrically shaped valve head 362 relative to the drive adapter 316.

Each of the flow control valves of the present disclosure provides variable flow control by incremental rotation of a stepper motor. Incremental rotation of the stepper motor is translated into an axial translation of a valve member. Also, as the valve member moves toward an open position, a pressure drop is created across the valve ports. Because the bore in which the valve member is slidably received has equal diameters at the contact points of the valve member and valve body, each port section balances forces acting on the valve member.

Flow control valves of the present disclosure offer several advantages. By providing pressure balanced poppet or spool designs for all the flow control valve embodiments, fluid pressure forces acting on the spool or poppet do not increase the operating force required from the stepper motors of the present disclosure. The stepper motors therefore only have to overcome static friction and sliding friction forces during translation of the valve member. The geometrically shaped heads provided with each of the valve members of the present disclosure preclude rotation of the valve members allowing the rotational force of the stepper motor to be directly translated to the valve member by a male threaded engagement shaft extending from the stepper motor which is directly threadably received in a female threaded bore of the valve member. The male threaded shaft and the geometrically shaped head are positioned in an adaptor member positioned between the valve body and the stepper motor. This design eliminates additional clutch members, key members, anti-rotational fasteners, and the like to prevent rotation of the valve member during translation.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.

## Claims

1. A flow control valve comprising:
a body having a longitudinal axis, the body defining a body bore oriented coaxially with the longitudinal axis and a seat member that extends into the body bore, the body bore having a bore diameter;
a valve member slidably disposed in the body bore and oriented coaxially with the longitudinal axis, the valve member including:
a valve head having a geometric shape defined by at least one anti-spin feature disposed along an otherwise cylindrical surface;
a valve member having a cylindrical shape, the valve member being disposed in the body bore adjacent the valve head and having a seat engagement member that extends radially outwardly to selectively engage the seat member of the body during sliding motion of the valve member in the body bore; and
a threaded bore extending into the valve head;
a drive adapter connected to the body, the drive adapter including a head receiving cavity that is shaped to match the geometric shape of the valve head and that slidingly receives the valve head while preventing axial rotation of the valve head relative to the drive adapter and the body;
a stepper motor connected to the drive adapter, the stepper motor operating to axially rotate a shaft threadably engaged with the threaded bore of the valve head to axially displace the valve member; and
an inlet port and an outlet port extending through the body from the body bore to a ported face of the body, the inlet port and the outlet port being disposed on opposite sides of the seat member.

2. The flow control valve of Claim 1, wherein the at least one anti-spin feature forming part of the geometric shape of the valve head includes a flat longitudinal face disposed along the otherwise cylindrical surface of the valve head.

3. The flow control valve of Claim 1 or 2, wherein the head receiving cavity includes a cavity face that abuts the flat longitudinal face of the valve head to prevent axial rotation of the valve head.

4. The flow control valve of any preceding Claim, wherein the geometric shape of the valve head includes two flat longitudinal faces disposed on opposite sides of the otherwise cylindrical surface of the valve head.

5. The flow control valve of Claim 4, wherein the head receiving cavity includes two cavity faces that abut the two flat longitudinal faces of the valve head to prevent axial rotation of the valve head.

6. The flow control valve of Claim 1, wherein the at least one anti-spin feature includes a groove disposed along the otherwise cylindrical surface of the valve head that engages the drive adapter to prevent rotation of the valve head relative to the drive adapter.

7. The flow control valve of Claim 1, wherein the at least one anti-spin feature includes a concave face disposed along the otherwise cylindrical surface of the valve head that abuts a complimentary cavity face of the head receiving cavity to prevent rotation of the valve head relative to the drive adapter.

8. The flow control valve of any preceding Claim, wherein the seat engagement member engages the seat member to define a closed position of the flow control valve.

9. The flow control valve of Claim 8, wherein rotation of the shaft in a first direction longitudinally displaces the valve member in the body bore from the closed position to an open position of the flow control valve, and rotation of the shaft in an opposite second direction returns the valve member from the open position to the valve closed position.

10. The flow control valve of any preceding Claim, wherein the valve member further includes:
a first piston positioned at an opposite end of the valve member from the valve head; and
a second piston positioned between the seat engagement member and the at least one anti-spin feature of the valve head, the first and second pistons operating to seal against cylinder walls of the body as the valve member slidably moves in the body bore.

11. The flow control valve of Claim 10, wherein the first and second pistons have substantially equal diameters such that a pressurized fluid acting oppositely against the first and second pistons results in balanced pressure forces acting on the valve member.

12. The flow control valve of Claim 1, wherein the valve member includes a resilient seal adjacent the valve head that slidably and sealingly engages the bore diameter of the body bore with a close tolerance fit to prevent fluid in the body bore from entering the head receiving cavity.

13. The flow control valve of any preceding Claim, wherein the shaft of the stepper motor is a male threaded shaft that is connected to and extends from the stepper motor such that incremental rotation of the stepper motor rotates the male threaded shaft within the threaded bore of the valve head to incrementally translate the valve member in an axial direction along the longitudinal axis.

14. The flow control valve of any preceding Claim, wherein the otherwise cylindrical surface of the valve head has a diameter that equals a diameter of the valve member adjacent the valve head.

15. The flow control valve of Claim 1, wherein the drive adapter is integrally connected to the body and the valve head is slidably received in the head receiving cavity, the anti-spin feature of the valve head including two flat longitudinal faces on the otherwise cylindrical surface of the valve head and the drive adapter having two cavity faces that mate with the two flat longitudinal faces of the valve head to prevent rotation of the valve head about the longitudinal axis.
